# EUROPEAN PATENT APPLICATION

(11) **EP 3 459 762 A1**
(43) Date of publication of application: **27.03.2019**
(21) Application number: 17799487.8
(22) Date of filing: 18.05.2017
(51) Int. Cl.: B60C 5/01, B60C 9/22

(54) **TIRE**

(30) Priority: 20.05.2016 JP 2016101860
(71) Applicant: Bridgestone Corporation, Tokyo 104-8340 (JP)
(72) Inventor: KOUNO, Yoshihide, Tokyo 104-8340 (JP); MATSUMOTO, Yoshifumi, Tokyo 104-8340 (JP); MATSUI, Kenji, Tokyo 104-8340 (JP); KON, Seiji, Tokyo 104-8340 (JP)
(74) Representative: Oxley, Robin John George
(86) International application number: PCT/JP2017/018750
(87) International publication number: WO 2017/200063

(57) **Abstract**

A tire includes a tire frame member made of a resin material; a top tread disposed outside the tire frame member in a tire radial direction; a belt layer disposed between the tire frame member and the top tread, the width dimension BW of the belt layer in a tire axial direction being in a range of from 85 to 105% of the ground width dimension TW of the top tread; and a belt reinforcement layer disposed at end portions of the belt layer in a tire width direction, the belt reinforcement layer having lower stiffness than the belt layer.

## Description

### Technical Field

The present disclosure relates to a tire having a tire frame member made of a resin material.

### Background Art

Using thermoplastic resins, thermoplastic elastomers, and the like as tire materials has been proposed, for the purposes of reducing weight and facilitating recycling, and, for example, Japanese Patent Application Laid-Open No. 2011-042235 discloses an air tire having a tire frame member that is molded using a thermoplastic high polymer material.

This tire is provided with a belt layer having high stiffness that includes a cord extending on an outer periphery of the tire frame member in a tire circumferential direction.

### SUMMARY OF INVENTION

### Problems to be Solved by the Invention

In tires, the width of a belt layer has effects on tire performance. As the tire performance, there are, for example, durability with a high internal pressure and under a heavy load, durability at a high speed, anti-wear performance, and the like.

Since a tire having the stiff belt layer has the hoop effect, the tire can stand a high internal pressure and a heavy load, and serves to ensure high durability at a high speed, as compared with a tire having no belt layer.

However, if the stiff belt layer has a narrow width, outside portions of the belt layer in a tire width direction (portions that are not pressed by the belt layer) protrude outwardly in a tire radial direction, during driving at a high speed, in an outer peripheral portion of the tire, thus causing an increase in heat generation, owing to deformation.

In a tread, at a portion having the belt layer in its radial inside, the belt layer can bind movement of the tread situated thereon in a tire circumferential direction.

However, the belt layer cannot bind the movement of the tread at portions having no belt layer in their radial inside, in other words, in the vicinity of shoulders at tire width outer portions, relative to end portions of the belt layer, so the tread easily moves in the tire circumferential direction and is trailed on a road surface at a larger area during driving, as compared with the portion having the belt layer in its radial inside, thus accelerating the progress of wear.

On the other hand, if the stiff belt layer has a wide width, since the belt layer widely presses a radial outer portion of a tire frame member, the protrusion can be prevented widely. However, in the tread, at portions each between an end portion of the belt layer and a tire width outer portion, i.e. in the vicinity of the shoulders, since a local deformation occurs during driving under a heavy load, a stress tends to concentrate there, thus possibly causing a break, e.g. the occurrence of a crack or the like owing to concentration of the stress. If the belt layer has a narrow width, since the deformed portions, i.e. the portions each between the end portion of the belt layer and the tire width outer portion, have wide widths, the deformation is not local, and the stress hardly concentrates.

As described above, the tire having the stiff belt layer on an outer periphery of the tire frame member is difficult to ensure all of high durability with a high internal pressure and under a heavy load, high durability at a high speed, and anti-wear performance.

Considering the circumstances described above, the present disclosure aims at ensuring all of high durability with a high internal pressure and under a heavy load, high durability at a high speed, and anti-wear performance, in a tire having a belt layer disposed on an outer periphery of a tire frame member made of a resin material.

### Means for Solving the Problems

A tire according to a first aspect includes a tire frame member made of a resin material, the tire frame member having a side portion extending outwardly from a bead portion in a tire radial direction and a crown portion extending inwardly from the side portion in a tire width direction; a tread disposed outside the tire frame member in the tire radial direction; a belt layer disposed between the tire frame member and the tread, a width dimension BW of the belt layer in a tire axial direction being in a range of from 85 to 105% of a ground width dimension TW of the tread; and a belt reinforcement layer disposed at an end portion of the belt layer in the tire width direction, the belt reinforcement layer having lower stiffness than the belt layer.

### Effect of the Invention

As described above, the tire having the tire frame member made of the resin material, according to the present disclosure, has the beneficial effect of ensuring high durability with a high internal pressure and under a heavy load, high durability at a high speed, and anti-wear performance.

### BRIEF DESCRIPTION OF THE DRAWINGS

Fig. 1 is a sectional view of an air tire according to a first embodiment of the present invention, sectioned along a rotation axis;
Fig. 2 is a sectional view of the tire showing the vicinity of a belt reinforcement layer;
Fig. 3 is a sectional view of an air tire according to a second embodiment of the present invention, sectioned along a rotation axis; and
Fig. 4 is a sectional view of an air tire according to a third embodiment of the present invention, sectioned along a rotation axis.

### DETAILED DESCRIPTION

### [First Embodiment]

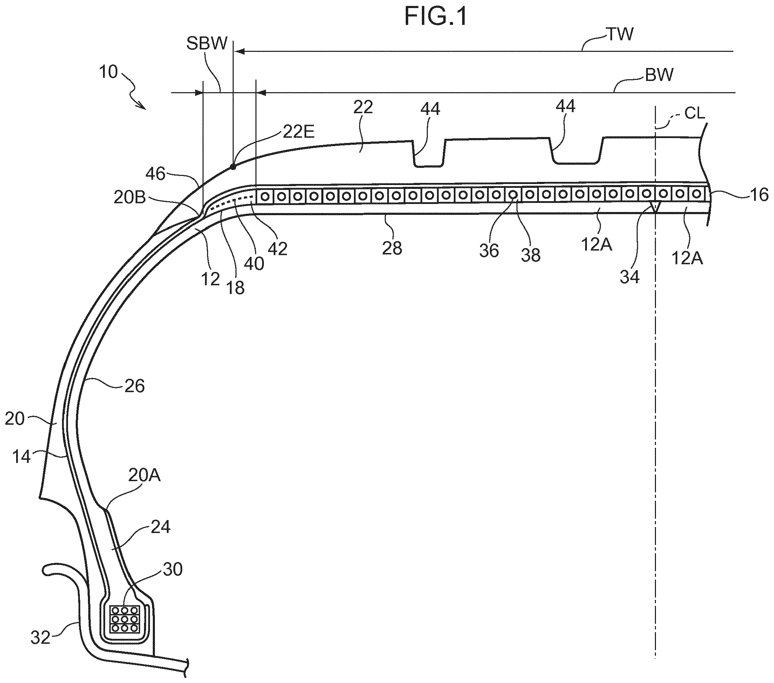

A tire 10 according to a first embodiment of the present invention will be described with reference to Fig. 1. Note that, the tire 10 according to the present embodiment is used in passenger cars.

As shown in Fig. 1, the tire 10 according to the present embodiment includes a tire frame member 12, a frame member reinforcement layer 14, a belt layer 16, belt reinforcement layers 18, side treads 20, and a top tread 22.

### (Tire Frame Member)

The tire frame member 12 is molded of a resin material into a ring shape by joining a pair of tire pieces 12A in a tire equatorial plane CL. Note that, the tire frame member 12 may be formed by joining three or more tire pieces 12A.

The tire frame member 12 includes a pair of bead portions 24, a pair of side portions 26 that extend outwardly from the pair of bead portions 24 in a tire radial direction, and a crown portion 28 that extends inwardly from the side portions 26 in a tire width direction.

As the resin material for making the tire frame member 12, a thermoplastic resin, a thermoplastic elastomer (TPE), a thermosetting resin, or the like having the same elasticity as rubber can be used. Considering elasticity during driving and moldability during manufacturing, a thermoplastic elastomer is preferably used. Note that, the tire frame member 12 may be entirely or partly made of the resin material.

As the thermoplastic elastomer, there are a polyolefin thermoplastic elastomer (TPO), a polystyrene thermoplastic elastomer (TPS), a polyamide thermoplastic elastomer (TPA), a polyurethane thermoplastic elastomer (TPU), a polyester thermoplastic elastomer (TPC), a dynamic cross-linking thermoplastic elastomer (TPV), and the like.

As the thermoplastic resin, there are a polyurethane resin, a polyolefin resin, a vinyl chloride resin, a polyamide resin, and the like. As a thermoplastic material, a material having, for example, a deflection temperature under a load (under a load of 0.45 MPa), defined by ISO75-2 or ASTM D648, of 78°C or more, a tensile yield strength, defined by JIS K7113, of 10 MPa or more, a tensile fracture elongation (JIS K7113), defined by the same JIS K7113, of 50% or more, and a Vicat softening temperature (A test), defined by JIS K7206, of 130 °C or more can be used.

Bead cores 30 are embedded in the bead portions 24 of the tire frame member 12. As a material for making the bead core 30, a metal, an organic fiber, an organic fiber covered with a resin, a rigid resin, or the like can be used. In the tire frame member 12, the bead portion 24 is made thick so as to have higher flexural rigidity than the side portion 26. The bead cores 30 may be omitted, if sufficient rigidity is ensured in the bead portions 24 to the extent of having no problem in a fit with a rim 32.

Between the pair of tire pieces 12A of the tire frame member 12, resin joint members 34 are provided at the center of the crown portion 28 in the tire width direction, in other words, in the tire equatorial plane CL. The pair of tire pieces 12A are joined to each other through the joint members 34 by welding.

As a resin used for the joint member 34, the same or a different type of thermoplastic material as or from the material of the tire piece 12A can be used. The tire pieces 12A may be joined to each other by welding, through an adhesive, or the like, without using the joint members 34.

### (Belt Layer)

The belt layer 16 is provided on an outer peripheral surface of the crown portion 28. The belt layer 16 is configured to include a belt cord 36 that extends along a tire circumferential direction. To be more specific, the belt layer 16 according to the present embodiment is configured by helically winding the steel belt cord 36 covered with a resin 38 in the tire circumferential direction. The belt cord 36 is made of a multi-filament (stranded wires), but may be made of a mono-filament (a solid wire).

As the resin 38 for covering the belt cord 36, the same or a different type of thermoplastic material as or from the material of the tire piece 12A can be used. Note that, the resin 38 of the belt layer 16 is welded to the tire frame member 12.

Note that, "extending along the tire circumferential direction" described above includes extending at an angle of 5° or less with respect to the tire circumferential direction.

In a case where BW represents the width dimension of the belt layer 16 measured along a tire axial direction, and TW represents the ground width dimension of the top tread 22 measured along the tire axial direction, the width dimension BW is set within a range of from 85 to 105% of the ground width dimension TW of the top tread 22.

The ground width dimension TW of the top tread 22 is the dimension between one ground end 22E and the other ground end 22E measured along the tire width direction, provided that the tire 10 is fitted on a standard rim defined by JATMA YEAR BOOK (Japan Automobile Tyre Manufactures Association, 2016), and the tire 10 is filled with air at an internal pressure of 100% of an air pressure (maximum air pressure) corresponding to a maximum load capability (a boldface load in an internal pressure-load capability correspondence table) in applicable size and ply rating in JATMA YEAR BOOK, and is applied with the maximum load capability.

### (Belt Reinforcement Layer)

In the tire 10 according to the present embodiment, the belt reinforcement layers 18, which are constituted of separate members from the belt layer 16, are provided on an outer peripheral surface of the crown portion 28 of the tire frame member 12, in the outside of the belt layer 16 in the tire width direction.

The belt reinforcement layer 18 is designed to have lower stiffness than the belt layer 16, in comparison per unit of width in the tire width direction. Note that, "stiffness" described here represents tensile stiffness in the tire circumferential direction.

To make the tensile stiffness of the belt reinforcement layer 18 in the tire circumferential direction lower than the tensile stiffness of the belt layer 16 in the tire circumferential direction, the belt reinforcement layer 18 according to the present embodiment is configured such that a plurality of steel belt reinforcement cords 40 each of which is thinner than the belt cord 36 of the belt layer 16 are inclined in the tire circumferential direction and covered with a rubber 42 having lower tensile stiffness than the belt reinforcement cord 40.

The width dimension SBW of the belt reinforcement layer 18 measured along the tire axial direction, with respect to an end portion 16A of the belt layer 16, is preferably within a range of from 5 to 15% of the width dimension BW of the belt layer 16.

The angles of the belt reinforcement cords 40, with respect to the tire circumferential direction, are preferably within a range of from 0 to 90°.

Upon applying a tensile force in the tire circumferential direction, the belt cord 36 is burdened with the tensile force in the belt layer 16. However, in the belt reinforcement layer 18, the rubber 42 between the belt reinforcement cords 40 is elastically deformed and stretched, by the application of the tensile force, so the belt reinforcement layer 18 has the lower tensile stiffness than the belt layer 16 in the circumferential direction. Note that, the belt reinforcement cord 40 is made of a multi-filament (stranded wires), but may be made of a mono-filament (a solid wire).

Note that, as other methods to make the belt reinforcement layer 18 have lower stiffness than the belt layer 16, there are, for example, the following methods (1) to (4).
(1) The belt cord 36 is a non-tensile cord, while the belt reinforcement cords 40 are tensile cords, so the belt reinforcement layer 18 has lower stiffness than the belt layer 16. The tensile cord (also called high elongation cord) refers to a cord that has a large total amount of tension to a break, and has the degree of tension of, for example, 4% or more at the time of the break. "The degree of tension" refers to a value calculated from a measurement result of a tensile test adhering to JIS Z 2241. The non-tensile cord refers to a cord having an amount of tension of less than 4% at the time of the break.
(2) The belt layer 16 has a non-tensile property, while the belt reinforcement layer 18 has a tensile property, so the belt reinforcement layer 18 has lower stiffness than the belt layer 16. As an example, the belt cord 36 of the belt layer 16 is in the shape of a straight line in plan view, while the belt reinforcement cord 40 of the belt reinforcement layer 18 is in a wavy shape or a zigzag shape in plan view.
(3) The belt cord 36 of the belt layer 16 is a metal cord, while the belt reinforcement cords of the belt reinforcement layer 18 are organic fiber cords, so the belt reinforcement layer 18 has lower stiffness than the belt layer 16. As the metal cord, for example, there is a steel cord. As the organic fiber cord, for example, there are a polyester cord, a nylon cord, a PET cord, an aromatic polyamide cord, and the like.
(4) The implantation density (number/inch) of the belt reinforcement cords 40 per unit width of the belt reinforcement layer 18 is set lower than the implantation density (number/inch) of the belt cord 36 per unit width of the belt layer 16, so the belt reinforcement layer 18 has lower stiffness than the belt layer 16. In a case where the belt reinforcement cords 40 and the belt cord 36 have the same specifications, the implantation density of the belt reinforcement cords 40 is preferably set within a range of from 95 to 30% of the implantation density of the belt cord 36. Note that, the implantation density represents that how many cords are disposed per unit width (e.g. per inch), and can be also referred to as an implantation number.

Note that, by an appropriate combination of the above methods, the stiffness of the belt reinforcement layer 18 is made lower than that of the belt layer 16.

### (Frame Member Reinforcement Layer)

The frame member reinforcement layer 14 is disposed on a tire outer surface of the tire frame member 12. The frame member reinforcement layer 14 extends along the outer surface of the tire frame member 12 from the inside of the bead core 30 in the tire radial direction to the outside in the tire radial direction, and further extends beyond the tire equatorial plane CL to the inside of the opposite bead core 30 in the tire radial direction.

The frame member reinforcement layer 14 includes a plurality of reinforcement cords (not illustrated) covered with a rubber (not illustrated). The reinforcement cords of the frame member reinforcement layer 14 are made of organic fiber mono-filaments (solid wires) or organic fiber multi-filaments (stranded wires), which extend in the radial direction and are arranged in parallel in the tire circumferential direction. The reinforcement cords of the frame member reinforcement layer 14 may be inclined in an angle of 10° or less, with respect to the tire radial direction, in tire side view.

The frame member reinforcement layer 14 according to the present embodiment is formed by gluing a single ply 15, in which the plurality of reinforcement cords arranged in parallel with each other are covered with the (unvulcanized) rubber, on an outer peripheral surface of the molded tire frame member 12.

As the reinforcement cord of the frame member reinforcement layer 14, for example, a polyester cord, a nylon cord, a PET cord, an aromatic polyamide cord, or the like can be used. As a material for the reinforcement cord of the frame member reinforcement layer 14, metal such as steel may be used. Note that, the frame member reinforcement layer 14 may be made of reinforcement cords covered with a resin, instead of the rubber.

### (Side Tread)

The pair of side treads 20 are provided on the outer surface of the frame member reinforcement layer 14 so as to extend from the bead portions 24 of the tire frame member 12 to the outside of the crown portion 28 in the tire width direction. The side treads 20 may be made of the same type of rubber as that used in sidewalls of conventional rubber air tires.

An inner end portion 20A of the side tread 20 in the tire radial direction extends along an inner peripheral surface of the bead portion 24 of the tire frame member 12, and more specifically, to the inside of the bead core 30 in the tire radial direction. An outer end portion 20B of the side tread 20 in the tire radial direction is situated in the vicinity of the belt reinforcement layer 18.

### (Top Tread)

On the outside of the frame member reinforcement layer 14 in the tire radial direction, the top tread 22 is disposed as a tread. The top tread 22 is made of a rubber having higher wear resistance than the resin material for forming the tire frame member 12, and may be made of the same type of rubber as a tread rubber used in conventional rubber air tires. Note that, drainage grooves 44 are formed in a tread surface of the top tread 22.

To manufacture the tire 10 according to the present embodiment, the belt layer 16, the belt reinforcement layers 18, and the frame member reinforcement layer 14 are disposed on the outer surface of the tire frame member 12 molded in advance, and an unvulcanized rubber, which is to be the side treads 20 and the top tread 22, is further disposed on an outer surface thereof to obtain a green tire, and the green tire is loaded into a vulcanization mold to perform vulcanization molding. As the frame member reinforcement layer 14 disposed on the outer surface of the tire frame member 12, the reinforcement cords covered with the unvulcanized rubber are used. In the same manner, as the belt reinforcement layers 18 disposed on the outer surface of the tire frame member 12, the belt reinforcement cords 40 covered with the unvulcanized rubber 42 are used.

### (Operation and Effects)

In the tire 10 according to the present embodiment, since the belt layer 16 is provided between the tire frame member 12 and the top tread 22, in such a manner that the width dimension BW in the tire axial direction is in a range of from 85 to 105% of the ground width dimension TW of the top tread 22, the belt layer 16 can press an outer peripheral portion of the tire frame member 12 inwardly in the tire radial direction, owing to the hoop effect, and therefore it is possible to prevent the top tread 22 from protruding outwardly mainly at a road contact portion (for example, in the case of having a high internal pressure, a high rotation speed, or the like).

In the tire 10 according to the present embodiment, since the width dimension BW of the stiff belt layer 16 is in the range of from 85 to 105% of the ground width dimension TW, and the belt reinforcement layers 18 having lower circumferential tensile stiffness than the belt layer 16 are provided outside the belt layer 16 in the tire width direction, outer portions of the top tread 22, relative to the belt layer 16, in the tire width direction, in other words, portions in the vicinity of shoulders 46 are prevented from protruding outward, as compared with the case of having no belt reinforcement layer 18.

Since the belt reinforcement layers 18 having lower circumferential tensile stiffness than the belt layer 16 are provided outside the belt layer 16 in the tire width direction, it is possible to prevent a local deformation of the portions in the vicinity of the shoulders 46, under a heavy load. Therefore, it is possible to improve durability under the heavy load.

In the tire 10 according to the present embodiment, since the belt layer 16 the width dimension BW of which is in the range of from 85 to 105% of the ground width dimension TW can bind the top tread 22 that is in the outside of the belt layer 16 in the tire radial direction, the the top tread 22 is bound by the belt layer 16 mainly at the road contact portion thereof, thus decelerating the progress of wear, as compared with the case of having no belt layer 16.

In the tire 10 according to the present embodiment, since the belt reinforcement layers 18 disposed outside the belt layer 16 in the tire width direction bind the top tread 22, which is in the outside of the belt layer 16 in the tire radial direction, the circumferential movement of the top tread 22 is prevented even in the vicinity of the shoulders 46, corresponding to the outside portions of the belt layer 16 in the tire width direction, thus preventing the progress of wear.

According to the above operation, the tire 10 having the resin tire frame member 12 according to the present embodiment can ensure all of high durability with a high internal pressure, high durability under a heavy load, high durability at a high speed, and anti-wear performance.

If the width dimension SBW of the belt reinforcement layer 18 is less than 5% of the width dimension BW of the belt layer 16, there is little merit in providing the belt reinforcement layer 18. On the other hand, if the width dimension SBW of the belt reinforcement layer 18 exceeds 15% of the width dimension BW of the belt layer 16, there is a merit in providing the belt reinforcement layer 18, but an increase in usage of the belt reinforcement cords 40, more than necessary, causes an increase in weight of the tire 10.

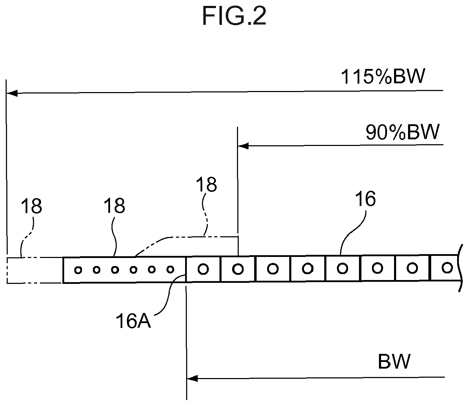

The belt reinforcement layers 18 according to the present embodiment are disposed from outer end portions of the belt layer 16 in the tire width direction to the outside in the tire width direction, but as shown in Fig. 2, a part of the belt reinforcement layer 18 may be overlapped with the belt layer 16, or a slight gap may be formed between the belt layer 16 and the belt reinforcement layer 18, as long as the effects of providing the belt reinforcement layers 18 are not inhibited.

The belt reinforcement layers 18 may be provided in any positions, as long as the belt reinforcement layers 18 are disposed at least outside the end portions 16A of the belt layer 16 in the tire width direction, but as shown in Fig. 2, the belt reinforcement layers 18 are preferably disposed, with respect to the end portion 16A of the belt layer 16, between the position of 90% of the width dimension BW of the belt layer 16 inwardly in the tire width direction and the position of 115% of the width dimension BW of the belt layer 16 outwardly in the tire width direction.

### [Second Embodiment]

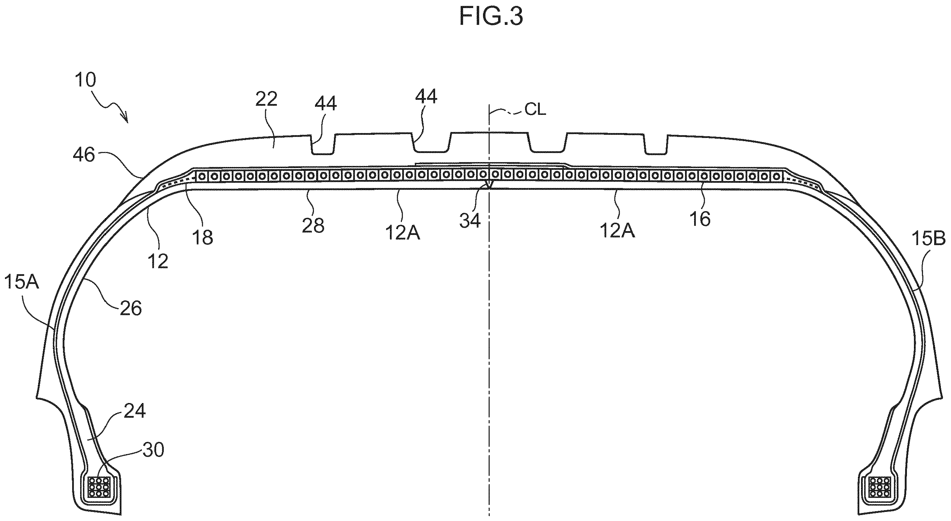

Next, a tire 10 according to a second embodiment of the present invention will be described with reference to Fig. 3. Note that, the same components as those of the first embodiment are indicated with the same reference numerals, and the description thereof is omitted.

Although the frame member reinforcement layer 14 of the tire 10 according to the first embodiment is formed of the single ply 15 that is bonded in a straddle manner from one of the bead portions 24 of the tire frame member 12 to the other bead portion 24, but the tire 10 according to the present embodiment, as shown in Fig. 3, is configured to include a ply 15A that extends from one bead portion 24 beyond a tire equatorial plane CL and ends in the vicinity of the tire equatorial plane CL, and a ply 15B that extends from the other bead portion 24 beyond a tire equatorial plane CL and ends in the vicinity of the tire equatorial plane CL and that partly overlaps with the ply 15A in the tire equatorial plane CL.

Only the difference between the tire 10 according to the present embodiment and the tire 10 according to the first embodiment is the structure of the frame member reinforcement layer 14, and the other structure is the same. The tire 10 according to the present embodiment can have the same operation and effects as the tire 10 according to the first embodiment.

### [Third Embodiment]

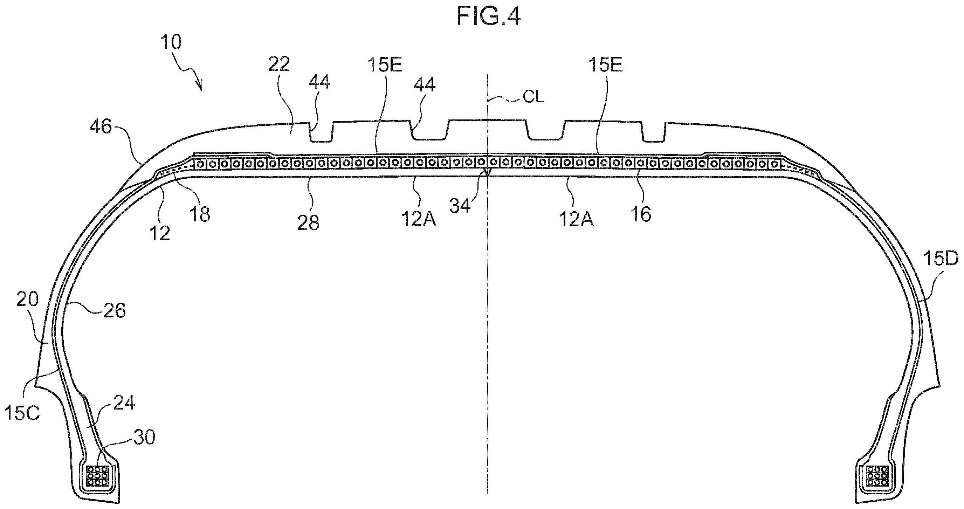

Next, a tire 10 according to a third embodiment of the present invention will be described with reference to Fig. 4. Note that, the same components as those of the first embodiment are indicated with the same reference numerals, and the description thereof is omitted.

As shown in Fig. 4, the tire 10 according to the present embodiment is configured to include a ply 15C that extends from one bead portion 24 beyond an end portion of a belt layer 16 and ends in the vicinity of the end portion of the belt layer 16, a ply 15D that extends from the other bead portion 24 beyond an end portion of the belt layer 16 and ends in the vicinity of the end portion of the belt layer 16, and a ply 15E that is disposed outside the belt layer 16 in the tire radial direction so as to cover an outer peripheral portion of the belt layer 16 and covers outer peripheral portions of the ply 15C and the ply 15D.

Only the difference between the tire 10 according to the present embodiment and the tire 10 according to the first embodiment is the structure of the frame member reinforcement layer 14, and the other structure is the same.

According to the tire 10 of the present embodiment, since a ply is divided into the ply 15C and the ply 15D that are mainly disposed along side surfaces of side portions 26, and the ply 15E that is mainly disposed along a crown portion 28, it is possible to dispose the plies having appropriate specifications in accordance with the individual portions.

The tire 10 according to the present embodiment can have the same operation and effects as the tire 10 according to the first embodiment.

### (Test Examples)

To verify the effects of the present invention, prototypes of tires that embody the present invention, as practical examples, and tires as comparative examples were built, and a BF drum test, a high-speed drum test, and a wear test were performed thereon.
- BF drum test: BF drum test evaluates durability of beads (side cases).
   Internal pressure: 300 kPa
   Load: A load of 180 to 200% of a MAX load of a compliant standard
   Test method: Whether the tire can be driven a stipulated distance or more (lower limit of 4500 km) at 60 km/h is checked.
- High-speed drum test: This test evaluates high-speed durability of the tire. Conditions are determined depending on a speed range (W range conditions are described below).
   Internal pressure: 320 kPa
   Load: A load of 68% of a MAX load of a compliant standard
   Test method: A speed is increased from 230 km/h by 10 km/h at intervals of ten minutes, until a break occurs. Whether to clear a reference value is checked.
- Wear test: Anti-wear performance (wear life) and wear appearance (the presence or absence of unbalanced wear) are checked in an actual vehicle test.
   Internal pressure: A condition specific to a vehicle
   Load: A load set on the vehicle
   Test method: After driving a certain distance in conditions imitating each market, a wear amount and wear appearance are measured.

Specifications of tires used in the tests are described below.
Tire size: 225/ 40R18
Rim size: 7.5 J to 8.0 J
Internal pressure: depending on test item
Structure of belt layer: belt cord is spiral (helically wound)
Material of belt cord of belt layer: steel cord
Structure (thickness) of belt cord of belt layer: φ 1.4 mm
Implantation density of belt cord of belt layer: 0.42 cords/ 1 mm
Structure of belt reinforcement layer: belt reinforcement cord has an angle of 0° with respect to a tire circumferential direction
Material of belt cord of belt reinforcement layer: nylon cord
Structure (thickness) of belt cord of belt reinforcement layer: thickness of 0.5 mm
Implantation density of belt cords in belt reinforcement layer: implant 1 cord/mm
Thickness of belt reinforcement layer: 0.76 mm

Note that, tires 1 and 2 have no belt reinforcement layer, and are different in the width dimension BW of a belt layer. Tires 3 to 7 have belt reinforcement layers, and are different in the width dimension BW of a belt layer, with respect to the ground width dimension TW of a top tread.

The tires 1 to 7 are identical in structure, except for the belt layer and the belt reinforcement layer.

Test results are shown in the following Table 1.

**Table 1**

| | Tire 1 | Tire 2 | Tire 3 | Tire 4 | Tire 5 | Tire 6 | Tire 7 |
|---|---|---|---|---|---|---|---|
| Ground width dimension TW (mm) of top tread | 200 | 200 | 200 | 200 | 200 | 200 | 200 |
| Width dimension BW (mm) of belt layer | 175 | 210 | 150 | 175 | 190 | 210 | 220 |
| Width dimension SBW (mm) of belt reinforcement layer | - | - | 12 | 12 | 12 | 12 | 12 |
| BW/TW (%) | - | - | 75 | 85 | 95 | 105 | 110 |
| Evaluation of BF drum test | 6000 km OK | 2500 km NG | 10000 km OK | 5500 km OK | 4500 km OK | 3000 km OK | 2500 km NG |
| Evaluation of high-speed drum test | 260 km/h NG | 320 km/h OK | 280 km/h OK | 290 km/h OK | 300 km/h OK | 310 km/h OK | 320 km/h OK |
| Evaluation of wear test | Presence of unbalanced wear NG | OK | OK | OK | OK | OK | OK |

It is apparent from the test results that the tires 4 to 6 whose BW/TW is within a range of from 85 to 105% have good results in each of the tests.

### [Other embodiments]

The embodiments of the present invention are described above, but the present invention is not limited to the above embodiments, and can be performed with various modifications, other than the above, without departing from the scope of the invention.

In the above embodiments, the frame member reinforcement layer 14 is disposed outside the belt layer 16 and the belt reinforcement layers 18, but the frame member reinforcement layer 14 may be disposed inside the belt layer 16 and the belt reinforcement layers 18 instead.

The belt reinforcement layer 18 according to the above embodiment has a configuration such that the belt reinforcement cords 40 are covered with the rubber 42, but the belt reinforcement cords 40 may be covered with a resin.

Please write a merit in covering the belt reinforcement layers 18 with the resin, if there is.

The tire 10 according to the embodiment is used in the passenger cars, but the present invention can be applied to tires for vehicles other than the passenger cars.

The disclosure of Japanese Patent Application No. 2016-101860 filed on May 20, 2016 is entirely incorporated by reference in this application.

All documents, patent applications, and technical standards cited in this application are hereby incorporated by reference into the present application, to the same extent as if each of the documents, the patent applications, or the technical standards were concretely and individually indicated to be incorporated by reference.

## Claims

1. A tire comprising:
a tire frame member made of a resin material, the tire frame member having a side portion extending outwardly from a bead portion in a tire radial direction and a crown portion extending inwardly from the side portion in a tire width direction;
a tread disposed outside the tire frame member in the tire radial direction;
a belt layer disposed between the tire frame member and the tread, a width dimension BW of the belt layer in a tire axial direction being in a range of from 85 to 105% of a ground width dimension TW of the tread; and
a belt reinforcement layer disposed at an end portion of the belt layer in the tire width direction, the belt reinforcement layer having lower stiffness than the belt layer.

2. The tire according to claim 1, wherein:
the belt layer is configured to include a belt cord that extends in a tire circumferential direction, and
the belt reinforcement layer is configured to include a belt reinforcement cord that extends in an inclined direction, with respect to the tire circumferential direction.

3. The tire according to claim 1, wherein:
the belt layer is configured to include a belt cord that extends in a tire circumferential direction, and
the belt reinforcement layer is configured to include a belt reinforcement cord that extends in the tire circumferential direction.

4. The tire according to claim 2 or 3, wherein:
the belt cord is a metal cord, and
the belt reinforcement cord is an organic fiber cord.

5. The tire according to any one of claims 2 to 4, wherein an implantation density of the belt reinforcement cord in the belt reinforcement layer is lower than an implantation density of the belt cord in the belt layer.

6. The tire according to any one of claims 2 to 5, wherein a diameter of the belt reinforcement cord is smaller than a diameter of the belt cord.

7. The tire according to any one of claims 2 to 6, wherein the belt cord has a non-tensile property, and the belt reinforcement layer has a higher tensile property than the belt cord.
